# FASCICULE DE BREVET EUROPEEN

(11) **EP 0 401 061 B1**
(45) Date de publication et mention de la délivrance du brevet: **27.10.1993**
(21) Numéro de dépôt: 90401149.1
(22) Date de dépôt: 27.04.1990
(51) Int. Cl.: B62D 6/02, G05D 7/06

(54) **Modulateur et circuit de direction assistée comprenant un tel modulateur**
Modulator und Servolenkungskreis mit einem solchen Modulator
Modulator and servo steering circuit with such a modulator

(30) Priorité: 31.05.1989 FR 8907144
(43) Date de publication de la demande: 05.12.1990
(73) Titulaire: ALLIEDSIGNAL EUROPE SERVICES TECHNIQUES, 93700 Drancy (FR)
(72) Inventeur: Kervagoret, Gilbert, Bendix Europe Services Techn., F-93700 Drancy (FR)
(74) Mandataire: Bentz, Jean-Paul

(56) Documents cités:
- EP-A- 0 396 433
- FR-A- 2 537 936
- US-A- 4 561 521

## Description

L'invention concerne un modulateur prévu pour dériver un débit de fluide sous pression du circuit d'alimentation en fluide d'un moteur hydraulique. Elle concerne également un circuit de direction assistée pour véhicule automobile dont l'assistance est fonction de la vitesse du véhicule, ce circuit mettant en oeuvre un tel modulateur.

On connaît du brevet US-A-4 561 521 un circuit de direction assistée du type précité dans lequel est utilisé un modulateur pour dériver, à grande vitesse du véhicule, une partie du fluide d'assistance sous pression vers le reservoir de fluide à basse pression, de manière à limiter l'assistance à grande vitesse. Ce modulateur est constitué par un simple piston commandé électriquement venant obturer ou non un orifice d'évacuation du fluide vers le réservoir de fluide à basse pression.

Un tel modulateur nécessite un dispositif d'actionnement important car l'une des faces du piston reçoit en permanence le fluide sous pression.

En outre, on sait que dans une direction assistée, il est souhaitable de maintenir constant le débit de fluide dérivé à une vitesse donnée du véhicule malgré les variations de pression pouvant provenir de la pompe d'alimentation ou du circuit dérivé en aval du modulateur, pour conserver les caractéristiques d'assistance. Or le modulateur décrit dans le document précité n'assure aucune fonction de régulation de débit.

Le document EP-A- 0 396 433 (état de la technique selon l'Article 54 (3) de la Convention sur le Brevet Européen) décrit un modulateur prévu pour dériver un débit déterminé de fluide sous pression du circuit d'alimentation d'un moteur hydraulique comprenant entre une entrée de fluide et une sortie de fluide, une électrovalve de commande et un régulateur de débit, ce dernier étant constitué par un alésage dans lequel un fourreau coulissant définit une chambre d'entrée et une chambre de régulation dans la paroi de laquelle est pratiquée la sortie de fluide, et un ressort disposé dans la chambre de régulation qui s'oppose au coulissement du fourreau dont la jupe est susceptible d'obturer la sortie de fluide.

L'invention se distingue de ce modulateur en ce que l'électrovalve est une électrovalve à action progressive dont le clapet est susceptible d'obturer plus ou moins une communication entre l'entrée de fluide et la chambre d'entrée en fonction du signal appliqué à l'électrovalve, et le ressort s'appuie sur un piston fermant la chambre de régulation, derrière ce piston étant ménagée une chambre de réaction communiquant avec l'entrée de fluide, le fourreau coulissant étant percé d'une restriction.

On obtient de cette façon par le simple actionnement d'une électrovalve, un modulateur avec régulation de débit, ce qui rend l'ensemble simple, fiable et économique.

Ce modulateur peut également comporter un orifice auxiliaire de sortie ménagé dans l'alésage en regard de la jupe du fourreau, de telle manière que cet orifice auxiliaire soit normalement obturé, et ouvert en cas de relâchement total du clapet d'électrovalve et égalisation des pressions entre la chambre d'entrée et la chambre de réaction.

L'invention concerne également un circuit de direction assistée pour véhicule automobile, dont l'assistance est fonction de la vitesse du véhicule, comprenant une source de fluide sous pression, un dispositif d'assistance, un détecteur de la vitesse du véhicule, une unité de commande de l'assistance et un modulateur tel que précédemment décrit, l'unité de commande délivrant au modulateur un signal électrique fonction de la vitesse du véhicule.

L'invention sera mieux comprise et d'autres buts, avantages et cactéristiques de celle-ci apparaitront plus clairement à la lecture de la description qui suit donnée à titre non limitatif et à laquelle sont jointes deux planches de dessins sur lesquels :
- la Figure 1 représente schématiquement un modulateur conforme à la présente invention,
- la Figure 2 représente en coupe schématiquement un mode de réalisation d'un tel modulateur,
- la Figure 3 représente schématiquement un circuit de direction assistée comprenant un tel modulateur, et
- la Figure 4 représente schématique un modulateur pour circuit de direction assistée et comprenant une valve complémentaire pour les vitesses élevées.

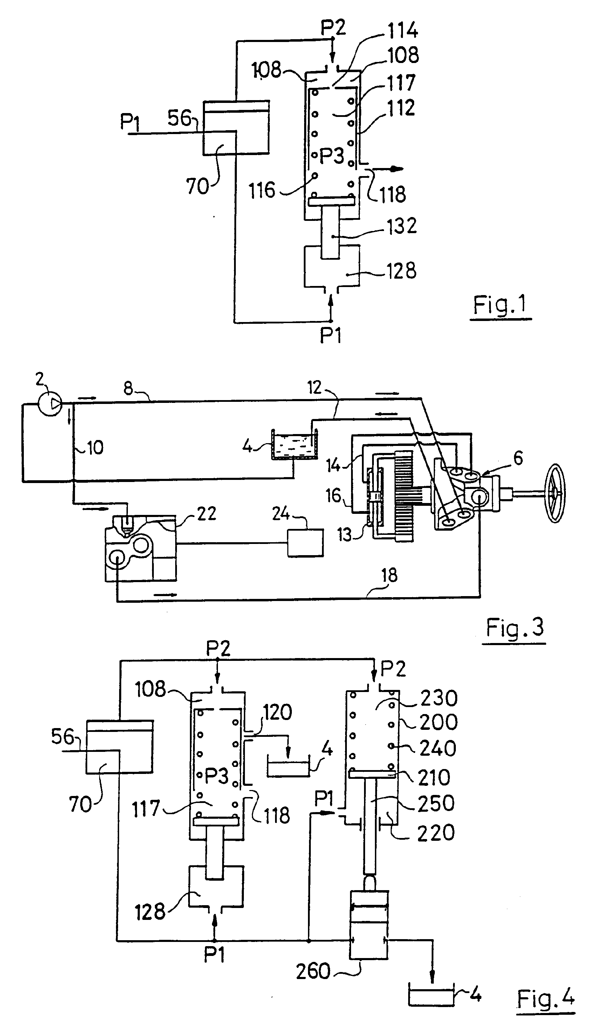

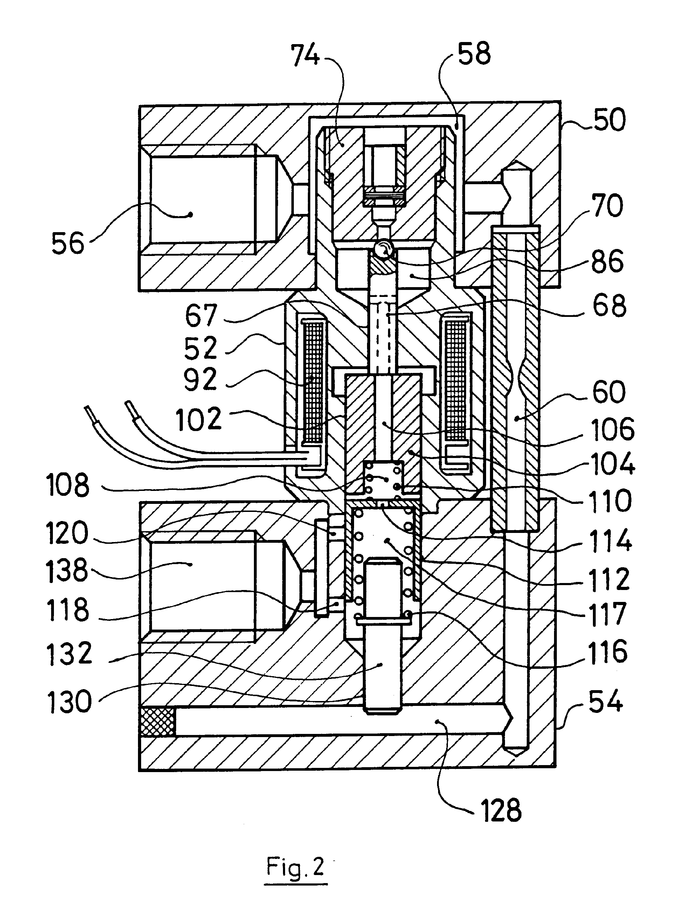

En référence maintenant aux Figures, le modulateur selon l'invention a été représenté Figure 1. Ce modulateur comprend une électrovalve 70 de commande du débit de fluide à dériver du circuit d'alimentation non représenté, d'un moteur hydraulique. Le fluide dérivé pénètre à la pression P₁ par l'entrée 56 dans l'électrovalve dont le clapet obture plus ou moins une communication entre l'entrée 56 et la chambre d'entrée 108 du régulateur associé en fonction du signal appliqué à la bobine de l'électrovalve. L'effort de l'électrovalve sur ce clapet détermine la pression P₂ dans la chambre d'entrée 108. Le régulateur est constitué par un alésage pratiqué dans un corps. Dans cet alésage, coulisse un fourreau 112 pourvu d'une jupe, percé d'une restriction 114 et chargé par un ressort 116 placé dans une chambre de régulation 117 dont une paroi comporte un orifice 118 formant sortie de fluide et qui peut être plus ou moins obturé par la jupe du fourreau 112.

Cette chambre de régulation 117 est fermée à son autre extrémité par l'extrémité d'un piston 132 sur lequel le ressort 116 prend appui. L'entrée de fluide 56 communique avec une chambre de réaction 128 où fait saillie l'autre extrémité du piston 132.

L'homme du métier comprendra aisément qu'en faisant varier le signal appliqué à l'électrovalve, on obtient une variation correspondante de la pression P₂ dans la chambre d'entrée 108 du régulateur et, donc, de la pression P₃ régnant dans la chambre de régulation 117. Le piston 132 sous l'effet de la différence entre la pression P₁ régnant dans la chambre de réaction 128 et la pression P₃ régnant dans la chambre de régulation 117 modifie la pré-contrainte appliquée au ressort 116.

Il en résulte donc un rapport linéaire entre le signal appliqué à la bobine de l'électrovalve 70 et le débit régulé de fluide traversant le modulateur selon l'invention.

On aura compris qu'il suffit de choisir judicieusement le diamètre du piston 132 pour obtenir le rapport linéaire souhaité.

La Figure 2 représente un mode de réalisation du modulateur représenté schématiquement Figure 1. Sur cette Figure 2, le modulateur illustré est composé d'un corps d'entrée 50, d'une électrovalve 52, et d'un corps de sortie 54.

Le corps d'entrée 50 comporte une entrée 56 de fluide sous pression P₁ communiquant par la chambre 58 et le tube 60 équipé d'une restriction avec la chambre de réaction 128 dans le corps de sortie 54.

L'électrovalve 52 comprend un alésage 67 dans lequel coulisse une tige creuse 68 portant une bille de clapet 70 dont le siège est formé sur un bouchon percé 74, relié à l'entrée de fluide 56.

Elle comprend également un bobinage 92 et un noyau magnétique 104 coulissant dans un alésage 102. Le noyau magnétique 104 est traversé d'un conduit axial 106 définissant une chambre 108 dans laquelle est logé un ressort 110, et constituant, par exemple, la chambre d'entrée précitée.

Dans l'alésage 102, coulisse également un fourreau 112 de régulateur de débit, percé d'une restriction 114, et chargé par un ressort 116 placé dans la chambre de régulation 117 formée dans l'alésage 102, de telle manière que le fourreau 112 soit soumis à l'action antagoniste des deux ressorts 110 et 116. Le ressort 116 s'appuie par son extrémité opposée au fourreau 112 sur la colerette d'un piston 132 coulissant dans un alésage 130 pratiqué dans le corps de sortie 54. L'alésage 102 comporte au moins un orifice 118 qui peut être obturé par le bord inférieur de la jupe du fourreau 112 et qui communique avec un orifice de sortie 138.

Le piston 132 reçoit sur sa face supérieure, en plus de l'appui du ressort 116, la pression P₃ existant dans la chambre de régulation 117, et sur sa face inférieure, la pression P₁ du fluide d'entrée du modulateur régnant dans la chambre de réaction 128 communiquant par le tube 60 et la chambre 58 avec l'entrée de fluide 56.

Le modulateur de débit fonctionne de la manière suivante : en fonction du signal appliqué au bobinage 92 de l'électrovalve, on commande par l'intermédiaire du noyau 104 et de la tige creuse 68, l'effort sur la bille 70 et, par conséquent, la pression P₂ existant dans la chambre 86 qui se propage par la tige creuse 68 et le conduit 106 jusqu'à la chambre d'entrée 108.

Le débit de fluide passant par la restriction 114 du fourreau 112, provoque une perte de charge et une pression P₃ dans la chambre de régulation 117 inférieure à la pression P₂. Ce débit peut ensuite par l'orifice 118, gagner l'orifice de sortie 138.

Le fourreau 112 du régulateur de débit recevant sur sa face supérieure la pression P₂ plus l'effort sensiblement constant du ressort 110, et sur sa face inférieure la pression de sortie P₃ plus l'effort du ressort 116 lui-même soumis par l'effet du piston 132 à la différence des pressions P₁ et P₃, obture plus au moins l'orifice 118, en assurant un débit constant, dont la valeur est fonction par voie de conséquence du signal appliqué au bobinage 92.

On a prévu en outre sur le modulateur de la Figure 2, un orifice auxiliaire 120 pratiqué dans la paroi de la chambre de régulation 117 en regard normalement de la jupe du fourreau 112. Cet orifice auxiliaire 120 est donc normalement obturé. Toutefois, en cas de relâchement total du clapet d'électrovalve 70, le fourreau vient fermer l'orifice de sortie 118 et ouvrir cet orifice auxiliaire 120 qui communique avec la sortie de fluide 138. La position de cet orifice auxiliaire 120 est telle qu'il ne puisse s'ouvrir qu'en cas de défaillance électrique de la bobine 92 de l'électrovalve, défaillance correspondant à une ouverture totale du clapet 70 rendant la pression P₂ sensiblement égale à la pression P₁ d'entrée du fluide.

Un tel modulateur peut équiper favorablement le circuit de direction assistée représenté Figure 3. Il s'agit dans l'exemple représenté Figure 3 d'un circuit du type à valve à double distribution permettant de faire varier l'assistance en fonction de la vitesse du véhicule. Il comprend une pompe 2 aspirant au réservoir 4 du fluide sous basse pression qu'elle refoule sous haute pression vers une première distribution de la valve 6 par le conduit 8 et vers le modulateur 22 par le conduit 10. La première distribution de la valve 6 rejette le fluide au réservoir 4 par le conduit 12 et alimente par les conduits 14 et 16 le vérin 13 d'assistance à la direction relié aux roues (non représentées). Une deuxième distribution reçoit un débit dérivé par le modulateur par le conduit 18 et rejette le fluide au réservoir par le conduit 12.

L'unité de commande 24 commande le modulateur 22 et reçoit des informations, telles que la vitesse du véhicule au moyen de détecteurs (non représentés).

De façon connue en soi, à basse vitesse, le modulateur ne dérive que très peu de fluide, ce qui assure une assistance maximale par le vérin 13. Par contre, à grande vitesse, ce modulateur dérive un très important débit de fluide et le vérin 13 n'est pratiquement plus alimenté.

Toutefois, grâce à la deuxième distribution, à grande vitesse, un coup de volant important pourra être assisté par étranglement du débit dérivé, et donc remontée de la pression dans la première distribution.

De manière à dériver un maximum de fluide sous pression à vitesse élevée, on peut prévoir d'ajouter au modulateur un dispositif auxiliaire de court-circuit comme représenté Figure 4. Un alésage auxiliaire 200 est, par exemple, prévu dans le corps du modulateur. Dans cet alésage auxiliaire 200, coulisse un piston 210 définissant une chambre avant 220 et une chambre arrière 230. La chambre avant 220 est reliée à l'entrée de fluide 56, tandis que la chambre arrière 230 est reliée à la chambre d'entrée 108 du régulateur. Un ressort 240 disposé dans la chambre arrière 230 équilibre le piston 210. Ce dernier est pourvu d'un poussoir 250 commandant une valve 260 à deux états déterminés. Au repos de ce dispositif, le clapet de la valve 260 est fermé et n'autorise aucune communication entre l'entrée de fluide 56 du modulateur et le réservoir 4. Lorsque la différence des pressions régnant dans les chambres avant et arrière 220,230 est supérieure à un seuil déterminé, c'est à dire à vitesse élevée du véhicule, le clapet de la valve 260 s'ouvre et le fluide à l'orifice d'entrée 56 est directement envoyé au réservoir 4. L'assistance à la direction du véhicule est alors fortement diminuée.

## Revendications

1. Modulateur prévu pour dériver un débit déterminé de fluide sous haute pression du circuit d'alimentation d'un moteur hydraulique comprenant entre une entrée de fluide (56) et une sortie de fluide (118,138), une électrovalve de commande et un régulateur de débit, ce dernier étant constitué par un alésage dans lequel un fourreau coulissant (112) définit une chambre d'entrée (108) et une chambre de régulation (117) dans la paroi de laquelle est pratiquée la dite sortie de fluide (118), et un ressort (116) disposé dans la dite chambre de régulation (117) qui s'oppose au coulissement du dit fourreau (112) dont la jupe est susceptible d'obturer la dite sortie de fluide (118), la dite électrovalve étant une électrovalve à action progressive dont le clapet (70) est susceptible d'obturer plus ou moins une communication entre la dite entrée de fluide (56) et la dite chambre d'entrée (108) du régulateur, en fonction du signal appliqué à la dite électrovalve, le dit ressort (116) s'appuyant sur un piston (132) fermant la dite chambre de régulation (117) et derrière lequel est ménagée une chambre de réaction (128) communiquant avec la dite entrée de fluide (56), le fourreau coulissant (112) étant percé d'une restriction (114).

2. Modulateur suivant la revendication 1, caractérisé en ce qu'un orifice auxiliaire (120) de sortie est ménagé dans le dit alésage en regard de la jupe du dit fourreau (112), de telle manière que cet orifice auxiliaire (120) soit normalement obturé et ouvert en cas si la pression dans la dite chambre d'entrée (108) est égale à celle de la dite chambre de réaction (128).

3. Circuit de direction assistée pour véhicule automobile, dont l'assistance est fonction de la vitesse du véhicule, comprenant une source de fluide sous haute pression (2), un dispositif d'assistance (13), un detecteur de la vitesse du véhicule, une unité de commande (24) de la dite assistance, un modulateur prévu pour dériver un débit déterminé de fluide sous haute pression du circuit d'alimentation (8) du dispositif d'assistance (13) caractérisé en ce que le dit modulateur est conforme à l'une des revendications 1 et 2, le dit orifice de sortie (118) étant relié à un réservoir de fluide à basse pression (4), la dite unité de commande (24) délivrant à la dite électrovalve un signal électrique fonction de la vitesse du véhicule.

4. Circuit selon la revendication 3, caractérisé en ce que le dit modulateur comporte un alésage auxiliaire (200) dans lequel un piston (210) définit une chambre avant (220) et une chambre arrière (230) auxquelles sont respectivement reliées la dite entrée de fluide (56) et la dite chambre d'entrée (108), le dit piston (210) étant pourvu d'un poussoir (25) permettant d'ouvrir une communication entre la dite entrée de fluide (56) et le dit réservoir basse pression (4) lorsque la différence entre les pressions régnant dans les dites chambres avant et arrière (220,230) dépasse un seuil déterminé par un ressort (240) disposé dans la dite chambre arrière (230).

## Patentansprüche

1. Modulator, vorgesehen zum Abzweigen eines bestimmten Durchflusses von unter hohem Druck stehendem Fluid aus dem Versorgungskreis eines Hydraulikmotors, der zwischen einem Fluideingang (56) und einem Fluidausgang (118, 138) enthalt: ein Steuerelektroventil und einen Durchflußregler, der durch eine Bohrung gebildet ist, in der eine Gleithülse (112) eine Eingangskammer (108) und eine Regelkammer (117) abgrenzt, in deren Wand der Fluidausgang (118) ausgebildet ist, und eine Feder (116), die in der Regelkammer (117) angeordnet ist und der Verschiebung der Gleithülse (112) entgegenwirkt, deren Schürze den Fluidausgang (118) verschließen kann, wobei das Elektroventil ein progressiv wirkendes Elektroventil ist, dessen Verschlulßelement (70) die Verbindung zwischen dem Fluideingang (56) und der Eingangskammer (108) des Reglers in Abhängigkeit von dem an das Elektroventil angelegten Signal mehr oder weniger verschließen kann, wobei die Feder (116) sich auf einem Kolben (132) abstützt, der die Regelkammer (117) verschließt und hinter dem eine mit dem Fluideingang (56) verbundene Reaktionskammer (128) ausgebildet ist, und wobei die Gleithülse (112) von einer Drosselstelle (114) durchbrochen ist.

2. Modulator nach Anspruch 1, dadurch gekennzeichnet, daß in der Bohrung gegenüber der Schürze der Gleithülse (112) eine Ausgangchilfsöffnung (120) so ausgebildet ist, daß die Hilfsöffnung (120) normalerweise verschlossen ist und dann geöffnet ist, wenn der Druck in der Eingangskammer (108) gleich dem in der Reaktionskammer (128) ist.

3. Servolenkkreis für ein Kraftfahrzeug, bei dem die Servounterstützung von der Geschwindigkeit des Fahrzeugs abhängt, mit einer Quelle von unter hohem Druck stehender Flüssigkeit (2), einer Servounterstützungsvorrichtung (13), einer Erfassungsvorrichtung für die Geschwindigkeit des Fahrzeugs, einer Steuereinheit (24) für die Servounterstützung, einem Modulator, der dazu vorgesehen ist, einen vorbestimmten Durchfluß von unter hohem Druck stehendem Fluid aus dem Versorgungskreis (8) der Servounterstützungsvorrichtung (13) abzuzweigen, dadurch gekennzeichnet, daß der Modulator einem der Ansprüche 1 und 2 entspricht, wobei die Ausgangsöffnung (118) mit einem Vorratsbehälter von unter niedrigem Druck stehendem Fluid (4) verbunden ist, und wobei die Steuereinheit (24) dem Elektroventil ein von der Fahrzeuggeschwindigkeit abhängiges elektrisches Signal liefert.

4. Kreis nach Anspruch 3, dadurch gekennzeichnet, daß der Modulator eine Hilfsbohrung (200) enthält, in der ein Kolben (210) eine vordere Kammer (220) und eine hintere Kammer (230) abgrenzt, mit denen der Fluideingang (56) bzw. die Eingangskammer (108) verbunden sind, wobei der Kolben (210) mit einem Stößel (25) versehen ist, der eine Verbindung zwischen dem Fluideingang (56) und dem Vorratsbehälter mit niedrigem Druck (4) öffnen kann, wenn der Unterschied zwischen dem in der vorderen Kammer (220) herrschenden Druck und dem in der hinteren Kammer (230) herrschenden Druck eine Schwelle überschreitet, die durch eine in der hinteren Kammer (230) angeordnete Feder (240) bestimmt ist.

## Claims

1. Modulator intended for diverting a specific flow of fluid under high pressure from the supply circuit of a hydraulic motor, comprising, between a fluid inlet (56) and a fluid outlet (118, 138), a solenoid control valve and a flow regulator, the latter being composed of a bore, in which a sliding sleeve (112) defines an inlet chamber (108) and a regulating chamber (117), in the wall of which the said fluid outlet (118) is made, and a spring (116) arranged in the said regulating chamber (117) and opposing the sliding of the said sleeve (112), the skirt of which is capable of closing the said fluid outlet (118), the said solenoid valve being a progressively acting solenoid valve, the shutter (70) of which is capable of more or less closing communication between the said fluid inlet (56) and the said inlet chamber (108) of the regulator as a function of the signal applied to the said solenoid valve, the said spring (116) bearing on a piston (132) which closes the said regulating chamber (117) and behind which is formed a reaction chamber (108) communicating with the said fluid inlet (56), the sliding sleeve (112) being pierced with a restriction (114).

2. Modulator according to Claim 1, characterized in that an auxiliary outlet port (120) is made in the said bore facing the skirt of the said sleeve (112), in such a way that this auxiliary port (120) is normally closed and is opened in the event that the pressure in the said inlet chamber (108) is equal to that of the said reaction chamber (128).

3. Power-assisted steering circuit for a motor vehicle, the assistance of which is a function of the speed of the vehicle, comprising a source of fluid under high pressure (2), an assistance device (13), a vehicle-speed detector, a control unit (24) for the said assistance, and a modulator intended for diverting a specific flow of fluid under high pressure from the supply circuit (8) of the assistance device (13), characterized in that the said modulator accords with one of Claims 1 and 2, the said outlet port (118) being connected to a low-pressure fluid reservoir (4), the said control unit (24) supplying the said solenoid valve with an electrical signal which is a function of the speed of the vehicle.

4. Circuit according to Claim 3, characterized in that the said modulator possesses an auxiliary bore (200), in which a piston (210) defines a front chamber (220) and a rear chamber (230), to which the said fluid inlet (56) and the said inlet chamber (108) are respectively connected, the said piston (210) being equipped with a pusher (250) making it possible to open communication between the said fluid inlet (56) and the said low-pressure reservoir (4) when the difference between the pressures prevailing in the said front and rear chambers (220, 230) exceeds a threshold determined by a spring (240) arranged in the said rear chamber (230).
